# EUROPÄISCHE PATENTANMELDUNG

(11) **EP 1 348 838 A1**
(43) Veröffentlichungstag der Anmeldung: **01.10.2003**
(21) Anmeldenummer: 02006946.4
(22) Anmeldetag: 26.03.2002
(51) Int. Cl.: F01N 3/035, F01N 3/023, F01N 3/025, F01N 3/029, F01N 3/027, F01N 3/20

(54) **Abgasreinigungsanlage und Verfahren zur Regeneration eines Filters für partikelbelbeladene Gasströme**

(71) Anmelder: SIEMENS AKTIENGESELLSCHAFT, 80333 München (DE)
(72) Erfinder: Rusch, Klaus, 96123 Litzendorf (DE)
(74) Vertreter: Tergau & Pohl Patentanwälte

(57) **Zusammenfassung**

Eine Abgasreinigungsanlage (1) für partikelbeladene Gasströmen, insbesondere Abgas von Verbrennungskraftmaschinen, weist ein Filterelement (4) sowie eine Zufuhreinrichtung (13) für ein brennbares Fluid (F), insbesondere den in der Verbrennungskraftmaschine verwendeten Kraftstoff, auf. Die Zufuhreinrichtung (13) weist eine Zuleitung (16) zur Einbringung des brennbaren Fluids (F) in das Filterelement (4) auf, wobei eine Austrittsöffnung (17) der Zuleitung (16) im Filterelement (4) angeordnet ist. Damit ist eine gut kontrollierbare Energieeinbringung in das Filterelement (4) ermöglicht.

## Beschreibung

Die Erfindung betrifft eine Anlage zur Reinigung von Gasströmen, insbesondere Abgas von Verbrennungskraftmaschinen, mit einem Filterelement sowie mit einer Zufuhreinrichtung für ein brennbares Fluid, insbesondere den in der Verbrennungskraftmaschine verwendeten Kraftstoff. Des Weiteren betrifft die Erfindung ein Verfahren zur Regeneration eines Filterelements für partikelbeladene Gasströme, insbesondere Abgas von Verbrennungskraftmaschinen, wobei aus dem Abgas abgeschiedene Partikel im Filterelement oxidiert werden.

Ein Verfahren zur Behandlung von Abgasen eines Dieselmotors ist beispielsweise das z.B. aus der DE 197 48 561 A1 bekannte sogenannte CRT-System. Bei diesem System ist im Abgasstrom ein Filterelement einem Oxidationskatalysator nachgeschaltet. Im Oxidationskatalysator wird das Abgas durch die in diesem ablaufenden chemischen Reaktionen erhitzt. Aus dem aufgeheizten Abgas werden anschließend im als Rußfilter ausgebildeten Filterelement Partikel abgeschieden.

Ein Verfahren zur Regeneration von Filtersystemen sowie eine Vorrichtung zu dessen Durchführung sind beispielsweise aus der DE 36 08 838 A1 bekannt. Hierbei ist ein Filter zur Zurückhaltung von Rußpartikeln aus dem Abgas einer Brennkraftmaschine, insbesondere eines Fahrzeug-Dieselmotors, vorgesehen. Die Regeneration des Filters geschieht durch Oxidation der abgelagerten Partikel. Zur Oxidation des abgelagerten Rußes ist die Zufuhr von Sekundärenergie erforderlich. Dies erfolgt durch einen mit Dieselkraftstoff oder einem anderen brennbaren Fluid betriebenen, vor dem Filter angeordneten Brenner. Die Einbringung definierter Energiemengen in den Filter ist jedoch aufwändig, insbesondere die gleichmäßige Energieeinbringung über den Querschnitt des Filters.

Der Erfindung liegt die Aufgabe zugrunde, ein Verfahren zur Regeneration eines Filters für partikelbeladene Gasströme, insbesondere Abgas von Verbrennungskraftmaschinen, anzugeben, mit Hilfe dessen eine gut kontrollierbare Energieeinbringung in den Filter ermöglicht ist. Des Weiteren ist es Aufgabe der Erfindung, eine zur Durchführung des Verfahrens geeignete Vorrichtung anzugeben.

Die Aufgabe wird bezüglich der Vorrichtung gelöst durch eine Abgasreinigungsanlage mit den Merkmalen des Anspruchs 1. Hierbei weist die Abgasreinigungsanlage ein Filterelement sowie eine Zufuhreinrichtung für ein brennbares Fluid, insbesondere den in einer Verbrennungskraftmaschine verwendeten Kraftstoff, auf. Die Zufuhreinrichtung oder -vorrichtung ist zur Einbringung des brennbaren Fluids über eine Zuleitung in das Filterelement vorgesehen, wobei die Austrittsöffnung der Zuleitung im Filterelement angeordnet ist.

Aufgrund der Anordnung der Austrittsöffnung direkt im Filterelement ist eine offene Flamme sowie ein zündfähiges Gemisch vor dem Filterelement ausgeschlossen. Die gewünschte Energie freisetzende chemische Reaktion des brennbaren Fluids setzt unmittelbar mit dessen Austritt aus der Zuleitung direkt im Filterelement ein. Die Einleitung des brennbaren Fluids in das Filterelement ist gut dosierbar, die Reaktion des Fluids im Filterelement gut steuerbar. Die Gefahr einer Ansammlung von Fluid oder eines Fluid-Gas-Gemisches vor dem Eintritt des Abgases in das Filterelement ist prinzipbedingt nicht gegeben. Eine unkontrollierte Reaktion des Fluids vor dem oder im Filterelement, wie etwa eine Explosion oder ein zu schneller Abbrand, der zu einer unzulässig hohen Temperaturbelastung des Filterelements führen könnte, ist ausgeschlossen.

Durch die Dosierung des Fluids direkt in das Filterelement kann in diesem auf einfache Weise ein definiertes Temperaturniveau gehalten werden. Dieses Temperaturniveau kann derart hoch eingestellt sein, dass eine Aufheizung des Abgases vor Eintritt in das Filterelement nicht erforderlich ist, wie dies beispielsweise beim bekannten CRT-System erfolgt. Bei der erfindungsgemäßen Abgasreinigungsanlage kann dagegen die Funktion eines Oxidationskatalysators vom Filterelement, dessen primäre Aufgabe die Partikelabscheidung ist, zumindest teilweise mit übernommen werden. Dies gilt insbesondere in Betriebsphasen der Abgasreinigunganlage, in denen durch die Zuführung des brennbaren Fluids Energie in das Filterelement eingebracht wird.

Außerhalb dieser Betriebsphasen mit Fluidzufuhr zum Filterelement sind wiederum verschiedene Betriebszustände zu unterscheiden: Zum einen kann bei ausreichend hoher Temperatur im Filterelement eine Oxidation der abgeschiedenen Rußpartikel auch ohne Zufuhr von Sekundärenergie in Form von brennbarem Fluid erfolgen. Zum anderen kann die Temperatur im Filterelement auf einem Niveau liegen, auf dem noch keine Oxidation der Rußpartikel erfolgt. Ein solches Temperaturniveau kann jedoch ausreichend sein, um leichter oxidierbare, nicht mechanisch im Filterelement abscheidbare Abgasbestandteile zu oxidieren. Diese Abgasbestandteile sind damit im Filterelement, vergleichbar einem Oxidationskatalysator, wirksam behandelt. Zugleich sammeln sich Rußpartikel im Filterelement an. Diese können in Intervallen durch die Zufuhr von brennbarem Fluid abgebrannt werden. Somit ist sowohl bei permanenter als auch bei diskontinuierlicher Einbringung von brennbarem Fluid in das Filterelement ein vollständiger Ersatz einer herkömmlichen Abgasreinigungsanlage mit einem einem Filter vorgeschalteten Oxidationskatalysator durch die erfindungsgemäße Abgasreinigungsanlage ohne gesonderten Oxidationskatalysator ermöglicht.

Das Filterelement der Abgasreinigungsanlage ist vorzugsweise katalytisch aktiv. Die katalytischen Eigenschaften, die eine Herabsetzung der zur chemischen Umsetzung des brennbaren Fluids und zur Oxidation der im Filterelement abgeschiedenen Partikel erforderlichen Temperatur bewirken, sind hierbei durch eine katalytische Beschichtung und/oder katalytische Eigenschaften des Grundkörpers des Filterkörpers gegeben. Die Beschichtung und der Grundkörper können zumindest teilweise aus dem gleichen Material bestehen. Als Beschichtung kann beispielsweise Platin, andere Edelmetalle oder Metalloxide vorgesehen sein.

Nach einer bevorzugten Ausgestaltung weist die Zufuhrvorrichtung zur Einbringung des brennbaren Fluids in das Filterelement mehrere Zuleitungen auf, deren Austrittsöffnungen bevorzugt gleichmäßig über den Querschnitt des Filterelements verteilt sind. Alternativ hierzu kann beispielsweise auch eine z.B. ringförmige, in das Filterelement eingebettete Zuleitung mehrere Austrittsöffnungen aufweisen. Durch die Lage der Austrittsöffnungen ist ein sich im Filterelement über dessen Querschnitt ausbildendes Temperaturprofil gezielt beeinflussbar. Beispielsweise können, um einem Temperaturgefälle von der Mitte zum Rand des Filterelements entgegenzuwirken, die Austrittsöffnungen ausschließlich oder überwiegend in der Nähe des Umfangs des Filterelements angeordnet sein. Eine besonders feine Verteilung des brennbaren Fluids im Filterelement wird bevorzugt erreicht, indem die Zuleitungen als kapillares System ausgebildet sind.

Nach einer weiteren bevorzugten Ausgestaltung sind die Öffnungen, insbesondere Poren, die das Filterelement aufweist, zumindest in einem die Austrittsöffnungen umgebenden so genannten Frontteil des Filterelements kleiner als der minimale Flammabstand. Als minimaler Flammabstand ist diejenige Weite einer Öffnung zu verstehen, unterhalb derer ein Flammendurchtritt durch die Öffnung nicht möglich ist. Der minimale Flammabstand, auch als minimaler Zündabstand bezeichnet, ist von den an der Verbrennung beteiligten Stoffen abhängig. Die geometrische Gestaltung des Filters ist somit von der Art des verwendeten brennbaren Fluids abhängig. Durch die Vermeidung einer offenen Flamme im Filterelement ist eine Beschädigung dieses aufgrund thermischer Belastung ausgeschlossen und zugleich eine feine Regelbarkeit des Temperaturprofils im Filterelement gegeben.

Das Filterelement ist bevorzugt als Schaumkörper, insbesondere Schaumkeramik, ausgebildet. Mit dieser Ausbildung ist eine gute Abgasreinigungswirkung bei gleichzeitig nicht zu hohem Druckverlust ermöglicht. Des Weiteren ist mit der Ausbildung des Filterelements als Schaumkörper auf einfache Weise die Bedingung einer Unterschreitung des minimalen Flammabstandes durch die Porengröße erfüllbar. Als Werkstoff für das Filterelement ist vorzugsweise Siliciumcarbid (SiC) vorgesehen. Siliciumcarbid ist laserschweißbar und ermöglicht damit eine rationelle Fertigung. Weitere geeignete keramische Materialien sind beispielsweise SiO₂, Al-Oxide sowie Codierit. Auch metallische Werkstoffe sind für den Grundkörper des Filters verwendbar. Diese haben den Vorteil einer guten Wärmeleitfähigkeit und damit insbesondere eines rasch ansteigenden Reinigungswirkungsgrades, insbesondere hinsichtlich der katalytischen Oxidation nicht mechanisch rückhaltbarer Abgasbestandteile, beim Anfahrvorgang der Abgasreinigungsanlage.

Nach einer bevorzugten Weiterbildung weist das Filterelement eine elektrische Zusatzheizung auf. Die elektrische Beheizung dient zum einen dazu, zusätzlich zur Zuführung des brennbaren Fluids Energie in das Filterelement einzubringen, um dieses schneller und/oder weiter aufzuheizen. Zum anderen gestattet die elektrische Beheizung eine sehr fein dosierte Energieeinbringung, insbesondere auch mit geringer Leistung. Eine Zuschaltung der elektrischen Beheizung kann notwendig sein, falls die Temperatur im Filterelement derart niedrig ist, dass das zugeführte dosierte Fluid ohne weitere Energiezufuhr nicht oxidierbar ist.

Nach einer besonders vorteilhaften Ausgestaltung dient das Filterelement selbst als elektrisches Widerstandsheizelement. Diese Ausgestaltung ist beispielsweise bei der Verwendung von Siliciumcarbid als Material für das Filterelement ermöglicht. Die Verwendung des Filterelements oder eines Teils des Filterelements, beispielsweise des Frontteils, als Heizelement ermöglicht den Verzicht auf ein zusätzliches elektrisches Heizelement und stellt eine gleichmäßige Erwärmung des Filterelements bzw. des beheizten Teils des Filterelements sicher. Vorzugsweise ist derjenige Teil des Filterelements elektrisch beheizbar, in dem die Austrittsöffnungen für das brennbare Fluid angeordnet sind.

Nach einer weiteren vorteilhaften Weiterbildung ist in der Abgasreinigungsanlage dem primär der Partikelabscheidung dienenden Filterelement ein SCR (selektive katalytische Reduktion)-Reaktor nachgeschaltet. Der SCR-Reaktor ist bevorzugt mit dem Filterelement in einer gemeinsamen Baueinheit angeordnet. Die Anordnung des Filterelements im Abgasstrom vor dem SCR-Reaktor hat insbesondere den Vorteil, dass im Filterelement aus Stickstoffoxid gebildetes Stickstoffdioxid im SCR-Reaktor reduziert werden kann, wobei es gleichzeitig Rußpartikel oxidiert.

Bezüglich des Verfahrens wird die Aufgabe erfndungsgemäß gelöst durch ein Verfahren zur Regeneration eines Filterelements für das Abgas einer Brennkraftmaschine mit den Merkmalen des Anspruches 12. Vorteilhafte Ausgestaltungen und Weiterbildungen sind Gegenstand der auf diesen zurückbezogenen Unteransprüche. Im Zusammenhang mit der Abgasreinigungsanlage genannte Vorteile und Weiterbildungen sind sinngemäß auch auf das Verfahren übertragbar.

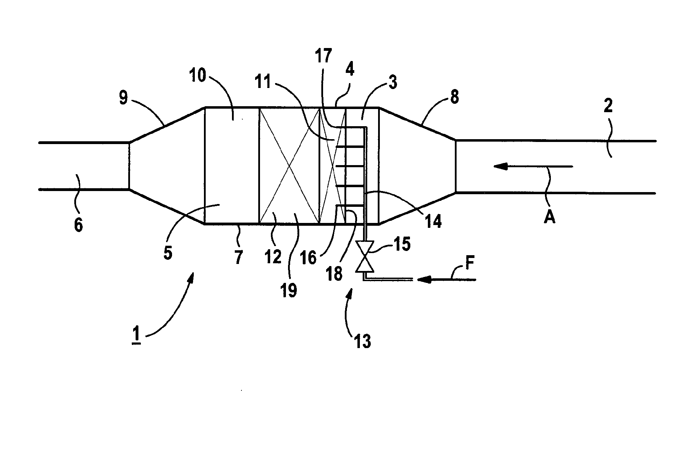

Nachfolgend wird ein Ausführungsbeispiel der Erfindung anhand einer Zeichnung näher erläutert. Hierin zeigt die einzige Figur eine von einem Abgas A durchströmte Abgasreinigungsanlage 1.

Das Abgas A einer nicht dargestellten Brennkraftmaschine, beispielsweise eines Fahrzeugdieselmotors, strömt durch eine Abgaszuleitung 2 auf einer Rohgasseite 3 in ein Filterelement 4 ein und tritt aus diesem auf einer Reingasseite 5 aus und verlässt die Abgasreinigungsanlage 1 durch eine Abgasableitung 6. Das Filterelement oder der Filter 4 ist in einem eine Baueinheit 7 bildenden Gehäuse zwischen der Abgaszuleitung 2 und der Abgasableitung 6 angeordnet. Das Gehäuse 7 ist rohgasseitig über ein Konusstück 8 und reingasseitig über ein Konusstück 9 mit der Abgaszuleitung 2 bzw. der Abgasableitung 6 verbunden. Zwischen den Konusstücken 8,9 ist innerhalb des Gehäuses 7 ein Einbauraum 10 konstanten Querschnitts für das Filterelement 4 vorgesehen. Das Filterelement 4 weist ein rohgasseitig angeordnetes Frontteil 11 und ein im Abgasstrom dahinter angeordnetes zweites Filterteil 12 auf. Das Frontteil 11 ist aus Schaumkeramik aus Siliciumcarbid (SiC) gebildet. Das zweite Filterteil 12 kann sich hiervon sowohl hinsichtlich dessen geometrischer Struktur als auch hinsichtlich des Grundkörpers und/oder der Oberflächenmaterialien sowie hinsichtlich dessen Funktion unterscheiden. Insbesondere kann, wie unten näher ausgeführt ist, das zweite Filterteil 12 ein SCR-Reaktor sein oder die Funktion eines solchen beinhalten. Alternativ zu einem Filterelement 4 aus-zumindest in dessen Frontteil 11 - Schaumkeramik ist auch ein Filterelement oder Filterkörper 4 aus Metall geeignet. Alternative geometrische Gestaltungen sind Sinterkörper, Netz-, Vlies- oder Drahtpackung. Das Filterelement 4 ist katalytisch aktiv beschichtet. Im Abgas A enthaltene Partikel, insbesondere Rußpartikel, werden im Filterelement 4 zurückgehalten. Ein kontinuierlicher oder diskontinuierlicher Abbau der Partikelbelegung des Filterelements 4 erfolgt durch Oxidation. Hierzu wird ein Fluid F über eine Zufuhrvorrichtung 13 in das Filterelement 4 eingebracht und in dessen Porensystem heterogen katalytisch umgesetzt. Die katalytische Beschichtung des Filterelements 4 erlaubt im Vergleich zu einer offenen Verbrennung geringe Umsetzungstemperaturen von ca. 280 bis 290°C.

Die Zufuhrvorrichtung oder -einrichtung 13 für das Fluid F weist eine Versorgungsleitung 14 mit einem Absperr- und Regelorgan 15 auf. Die Versorgungsleitung 14 ist weitestgehend außerhalb des Abgasstroms verlegt, damit das Fluid F, insbesondere der auch zum Betrieb der Brennkraftmaschine bereitgestellte Dieselkraftstoff, nicht zu stark erhitzt wird. Von der Versorgungsleitung 14 gehen als Zuleitungen Kapillaren 16 aus, die mit Austrittsöffnungen 17 direkt im Frontteil 11 des Filterelements 4 enden. Die Austrittsöffnungen 17 sind etwa gleichmäßig über den Querschnitt des Filterelements 4 verteilt und einerseits derart weit von der rohgasseitigen Oberfläche 18 des Frontteils 11 entfernt, dass auch ohne strömendes Abgas A praktisch kein Fluid F rohgasseitig aus dem Filterelement 4 austritt. Andererseits sind die Austrittsöffnungen 17 derart nah an der rohgasseitigen Oberfläche 18 angeordnet, dass durch Wärmeleitung innerhalb des Filterelements 4 bei Erhitzung desselben mit Hilfe des katalytisch verbrennenden Fluids F auch die Volumenbereiche des Filterelements 4 im Bereich der rohgasseitigen Oberfläche 18 ausreichend erhitzt werden, um in diesen Bereichen abgelagerte Rußpartikel vollständig zu oxidieren. Beim Betrieb der Abgasreinigungsanlage 1 tritt aufgrund der direkt in das Filterelement 4 geführten Kapillaren 16 keine Flamme und kein explosionsfähiges Gemisch auf der Rohgasseite 3 auf.

Zusätzlich zur Energieeinbringung durch das brennbare Fluid F kann das Filterelement 4 elektrisch beheizt werden. Hierzu ist dieses insgesamt oder zumindest dessen Frontteil 11 als Widerstandsheizelement ausgebildet. Im Fall der Verwendung von Siliciumcarbid ist die Ausbildung des Filterelements 4 als Widerstandsheizelement zum einen aufgrund des spezifischen Widerstands vorteilhaft, zum anderen ist aufgrund der Eignung von Siliciumcarbid zum Laserschweißen eine einfache Kontaktierung des Filterelements 4 an metallischen Bauteilen möglich. Das als Tiefenfilter ausgebildete Filterelement 4 weist ein Porensystem auf, dessen Öffnungen einen geringeren Durchmesser haben als den zur Bildung einer offenen Flamme notwendigen Minimaldurchmesser, den so genannten minimalen Flammabstand.

Das dem Frontteil 11 nachgeschaltete zweite Filterteil 12 beinhaltet einen SCR-Reaktor 19. Der SCR-Reaktor hat primär die Aufgabe, Stickoxide zu reduzieren. Zu diesem Zweck wird in an sich bekannter, nicht näher dargestellter Weise ein Reaktionsmittel, beispielsweise Harnstoff- oder Ammoniaklösung, in den SCR-Reaktor 19 eingebracht, insbesondere eingedüst. Darüber hinaus trägt der SCR-Reaktor 19 im Zusammenwirken mit dem Frontteil 11 des Filterelements 4 zur weiteren Rußreduzierung bei. Dies geschieht, indem Stickstoffdioxid, das vor dem Einströmen in den SCR-Reaktor 19 im Filterelement 4, insbesondere im Frontteil 11, aus im Abgas A enthaltenem Stickstoffoxid gebildet wurde, Rußpartikel oxidiert und dabei selbst zu Stickstoff reduziert wird. Die zum Betrieb des SCR-Reaktors 19 erforderliche Temperatur des Abgases A wird durch dessen Aufheizung ausschließlich im Filterelement 4 erreicht.

## Patentansprüche

1. Abgasreinigungsanlage (1) für partikelbeladene Gasströme, insbesondere Abgas von Verbrennungskraftmaschinen, mit einem Filterelement (4) sowie mit einer Zufuhreinrichtung (13) für ein brennbares Fluid (F), **dadurch gekennzeichnet,dass** die Zufuhreinrichtung (13) zur Einbringung des brennbaren Fluids (F) in das Filterelement (4) eine Zuleitung (16) aufweist, dessen Austrittsöffnung (17) im Filterelement (4) angeordnet ist.

2. Abgasreinigungsanlage (1) nach Anspruch 1, **dadurch gekennzeichnet, dass** das Filterelement (4) katalytisch aktiv ist.

3. Abgasreinigungsanlage (1) nach Anspruch 1 oder 2, **dadurch gekennzeichnet, dass** die Zufuhreinrichtung (13) mehrere Zuleitungen (16) aufweist, deren Austrittsöffnungen (17) über den Querschnitt des Filterelements (4) verteilt sind.

4. Abgasreinigungsanlage (1) nach Anspruch 3, **dadurch gekennzeichnet, dass** die Zuleitungen (16) der Zufuhreinrichtung (13) ein kapillares Verteilungssystem bilden.

5. Abgasreinigungsanlage (1) nach einem der Ansprüche 1 bis 4, **dadurch gekennzeichnet , dass** zumindest in einem die Austrittsöffnung (17) umgebenden Frontteil (11) des Filterelements (4) dieses ausschließlich Öffnungen aufweist, die kleiner als der minimale Flammabstand sind.

6. Abgasreinigungsanlage (1) nach einem der Ansprüche 1 bis 5, **dadurch gekennzeichnet , dass** das Filterelement (4) als Schaumkörper ausgebildet ist.

7. Abgasreinigungsanlage (1) nach einem der Ansprüche 1 bis 6, **dadurch gekennzeichnet , dass** das Filterelement (4) aus Siliciumcarbid gebildet ist.

8. Abgasreinigungsanlage (1) nach einem der Ansprüche 1 bis 7, **dadurch gekennzeichnet , dass** das Filterelement (4) zumindest teilweise elektrisch beheizbar ist.

9. Abgasreinigungsanlage (1) nach Anspruch 8, **dadurch gekennzeichnet, dass** zumindest ein Teil des Filterelements (4) ein elektrisches Widerstandsheizelement bildet.

10. Abgasreinigungsanlage (1) nach einem der Ansprüche 1 bis 9, **gekennzeichnet durch** einen im Abgasstrom beabstandet hinter der Austrittsöffnung (17) angeordneten SCR-Reaktor (19).

11. Abgasreinigungsanlage (1) nach Anspruch 10, **dadurch gekennzeichnet, dass** das Filterelement (4) einschließlich des SCR-Reaktors (19) in einer einzigen Baueinheit (7) angeordnet ist.

12. Verfahren zur Regeneration eines Filterelements (4) für partikelbeladene Gasströme, wobei aus einem Abgas (A) abgeschiedene Partikel im Filterelement (4) oxidiert werden, **dadurch gekennzeichnet, dass** ein brennbares Fluid (F) direkt in das Filterelement (4) eingeleitet wird.

13. Verfahren nach Anspruch 12, **dadurch gekennzeichnet,dass** die Oxidation der Partikel im Filterelement (4) katalytisch erfolgt.

14. Verfahren nach Anspruch 12 oder 13, **dadurch gekennzeichnet, dass** das brennbare Fluid (F) an mehreren Stellen innerhalb des Filterelements (4), zumindest annähernd gleichmäßig über den Strömungsquerschnitt des Abgases (A) verteilt, in das Filterelement (4) eingebracht wird.

15. Verfahren nach Anspruch 14, **dadurch gekennzeichnet, dass** die Einbringung des Fluids (F) in das Filterelement (4) über Kapillarleitung erfolgt.

16. Verfahren nach einem der Ansprüche 12 bis 15, **dadurch gekennzeichnet, dass** das Filterelement (4) zumindest teilweise elektrisch beheizt wird.

17. Verfahren nach einem der Ansprüche 12 bis 16, **dadurch gekennzeichnet, dass** das Abgas (A) nach dem Einströmen in das Filterelement (4) in einem SCR-Prozess behandelt wird.

18. Verfahren nach Anspruch 17, **dadurch gekennzeichnet, dass** während des SCR-Prozesses Stickstoffdioxid, das zuvor im Filterelement (4) aus Stickoxid gebildet wurde, zur Oxidation von Partikeln eingesetzt wird.
